# EUROPÄISCHE PATENTSCHRIFT

(11) **EP 1 698 666 B1**
(45) Veröffentlichungstag und Bekanntmachung des Hinweises auf die Patenterteilung: **28.04.2010**
(21) Anmeldenummer: 06004314.8
(22) Anmeldetag: 03.03.2006
(51) Int. Cl.: C08L 67/06

(54) **Stabilisierte ungesättigte Polyesterharzmischungen**
stabilized unsaturated polyester resin mixtures
mélanges de résine polyester insaturé stabilisés

(30) Priorität: 04.03.2005 DE 102005010548
(43) Veröffentlichungstag der Anmeldung: 06.09.2006
(73) Patentinhaber: Byk-Chemie GmbH, 46483 Wesel (DE)
(72) Erfinder: Göbelt, Bernd, Dr., 46487 Wesel (DE); Reestmann, Gerard, 6004 DM Weert (NL); Haubennestel, Karlheinz, 46487 Wesel (DE); Gertzen, Bärbel, 46446 Emmerich (DE); Sommer, Michael, 47055 Duisburg (DE)
(74) Vertreter: Leifert & Steffan

(56) Entgegenhaltungen:
- WO-A-00/40630
- WO-A-2005/056739
- DE-A1- 4 402 712

## Beschreibung

Die Erfindung betrifft gegen Entmischung stabilisierte ungesättigte Polyesterharzmischungen, deren Herstellung und die Verwendung von Blockcopolymeren auf der Basis ethylenisch ungesättigter Monomere in ungesättigten Polyesterharzmischungen.

Formmassen auf der Basis ungesättigter Polyesterharzsysteme finden als SMC (Sheet Molding Compounds), BMC (Bulk Molding Compounds), DMC (Dough Moulding Compounds), TMC (Thick Moulding Compounds) oder LDMC (Low Density Moulding Compounds) vielfältige Anwendung bei der Herstellung von Formteilen. Hierzu werden die Harze mit inerten Füllstoffen und faserförmigen Verstärkungsmaterialien versetzt. Beim Pressen der Formteile härtet das Harz durch Polymerisation aus. Hierbei verbindet sich das ungesättigte Polyesterharz mit in der Formulierung befindlichen ungesättigten Monomeren, die zum Beispiel Styrol oder Divinylbenzol sind. Die Aushärtung erfolgt im Allgemeinen radikalisch und wird mit einem zugesetzten Radikalinitiator, der durch den Temperaturanstieg während des Pressvorganges aktiviert wird, gestartet. Die Verstärkungsfasern und Füllstoffe sowie die Pigmente sind in dieser polymeren Matrix homogen verteilt.

Bei der Polymerisation findet ein Schrumpf der Teile statt. Um diesem Schrumpf entgegenzuwirken werden Schrumpfminderungskomponenten sogenannte LS-Additive (Low-Shrink-Additive) oder LP-Additive (Low-Profile-Additive) der Mischung beigegeben. Diese Schrumpfminderungskomponenten sind meist thermoplastische Kunststoffe wie Polystyrole oder Polyacrylate. Damit die Harzformulierung eine für den Pressvorgang handhabbare Viskosität besitzt, werden der Mischung zumeist Verdickungsmitteln aus der Gruppe der Metalloxide oder -hydroxide der ersten bis dritten Hauptgruppe des Periodensystems zugegeben. In einem "Reifeprozess" steigt die Viskosität der Mischung an bis die Masse schnittfest, aber noch formbar ist. Je nach Anwendung werden den ungesättigten Polyesterharzmischungen weitere Additive wie Trennmittel zugegeben.

Die einzelnen Komponenten in ungesättigten Polyesterharzsystemen bilden untereinander keine stabile Mischung. Um aber ein homogenes Formteil, das im gesamten Volumen gleichbleibende Materialeigenschaften besitzt, zu erhalten, müssen alle Komponenten während des Pressvorgangs in einer stabilen, homogenen Mischung vorliegen. Eine stabile und homogene Mischung aller Komponenten in den ungesättigten Polyesterharzsystemen ist auch bei der Lagerung des Premix in seiner verdickten oder unverdickten Form essenziell.

US 3 836 600 beschreibt die verträglichkeitsvermittelnde Wirkung von Blockcopolymeren, die einen Polyethylenoxidblock und einen Block, der ethylenisch ungesättigte, aromatische Monomere und/oder konjugierte Dienmonomere enthält, enthalten in härtbaren Kunststoffmischungen, wie ungesättigte Polyesterharzmischungen.

In US 3 887 515 wird der viskositätsreduzierende Effekt von Polyalkylenoxid-haltigen Blockcopolymeren in ungesättigten Polyesterharzmischungen beschrieben.

US 3 988 388 offenbart die Verwendung von Ethylenvinylacetat-Copolymeren mit einem Anteil von 60 - 99% Vinylacetat, Polyacrylaten mit langkettigen Alkylgruppen und Cellulosederivaten zur Dispergierung von Schrumpfminderungskomponenten der Klasse der Ethylen-Vinylacetat oder Ethylen-Vinylpropionat-Copolymere.

In US 4 491 642 und 4 555 534 wird die Verwendung mit grenzflächenaktiven Substanzen wie Silikonen oder Polyethern in Kombination von Vinylacetat/Maleinsäureanhydrid-Polymeren als Schrumpfminderungskomponente zur gleichmäßigeren Einfärbung von SMCs und BMCs mit Pigmenten beschrieben.

US 5 162 401 und 5 256 709 beschreiben Polyether respektive aromatische Kohlenwasserstoffe, die mit dem ungesättigten Polyester und dem Monomer nicht nur in der kalten Mischung sondern auch während des Aushärtvorganges verträglich sind, in ungesättigten Polyesterharzmischungen zur Verbesserung der Oberflächenglätte speziell bei SMC-Teilen.

Der Nachteil der bisher beschriebenen Verbindungen liegt in der begrenzten Verträglichkeit zu bestimmten Komponenten wie zum Beispiel zu bestimmten Schrumpfminderungskomponenten oder bestimmten Füllstoffen in ungesättigten Polyesterharzsystemen. Für eine universelle Einsetzbarkeit ist aber eine breite Verträglichkeit des Additivs in den ungesättigten Polyesterharzsystemen notwendig.

Die Aufgabe dieser Erfindung ist die Bereitstellung einer verstärkungsfaserhaltigen, homogenen, ungesättigten Polyesterharzmischung für druckhärtende Formmassen, die einen geringeren Teil an mischungsstabilisierenden Zusatzstoffen als der bisherige Stand der Technik enthält und wobei den mischungsstabilisierenden Zusatzstoffen eine breite Verträglichkeit zukommt. Insbesondere soll die Viskosität der ungesättigten Polyesterharzmischung nicht verringert werden, da die Viskositätsverringerung die Entmischung der Polyesterharzmischung begünstigt.

Die Aufgabe der Erfindung wird gelöst durch die Bereitstellung einer unter Anwendung äußeren Drucks härtbaren, ungesättigten Polyesterharzmischung, die mindestens folgende Komponenten umfasst:
a) ein ungesättigtes Polyesterharz mit einem gewichtsmittleren Molekulargewicht von 500 bis 5000 g/mol,
b) ein ethylenisch ungesättigtes Monomer,
c) eine Schrumpfminderungskomponente,
d) einen inerten Füllstoff;
e) eine Verstärkungsfaser; und
f) 0,01 bis 1 Gew.-% eines Blockcopolymeren bezogen auf das Gesamtgewicht der verstärkungsfaserhaltigen ungesättigten Polyesterharzmischung, wobei
   das Blockcopolymere mindestens einen A-Block und mindestens einen B-Block umfasst, wobei der
   A-Block mindestens ein einpolymerisiertes aminhaltiges, ethylenisch ungesättigtes Monomer enthält; und der
   B-Block mindestens ein einpolymerisiertes alkyl- und/oder phenylgruppenhaltiges, ethylenisch ungesättigtes Monomer enthält und frei von einpolymerisierten aminhaltigen, ethylenisch ungesättigten Monomeren ist.

Als ungesättigte Polyesterharze der Komponente a) können generell alle üblichen ungesättigten Polyesterharze (UP-Harze) dienen. Geeignet sind im Wesentlichen alle handelsüblichen UP-Harze. Insbesondere sind UP-Harze aus bisfunktionellen Carbonsäuren und Carbonsäureanhydriden, von denen mindestens eine Verbindung ungesättigt sein muss und bisfunktionellen Alkoholen und Epoxiden herstellbar.

Zu den bisfunktionellen ungesättigten Carbonsäuren und Carbonsäurederivaten zählen beispielsweise Maleinsäure, Fumarsäure, Phthalsäure, Isophthalsäure, Terephthalsäure und HET-Säure (Hexachlor-endomethylen-tetrahydrophthalsäure), sowie die Anhydride der genannten Carbonsäuren. Als bisfunktionelle Carbonsäurekomponente können jedoch zusätzlich auch Adipinsäure und Glutarsäure oder Diel-Alder-Addukte aus Maleinsäureanhydrid und Cyclopentadien eingesetzt werden. Bei der Herstellung von UP-Harzen können darüber hinaus auch Acrylsäure und Methacrylsäure mitverwendet werden.

Als bisfunktionelle Alkoholkomponente kommen insbesondere Propylen-, Dipropylen-, Ethylen-, Diethylen- und Neopentylglykol, sowie 1,4-Butandiol und 2,2,4-Trimethylpentan-1,3-diol in Frage. Des Weiteren können beispielsweise Diglycidylether des Tetrabrom-bis-phenols einsetzt werden.

Neben den bisfunktionellen Carbonsäuren und Alkoholen können auch höherfunktionelle Carbonsäuren und Alkohole einsetzt werden, was zu verzweigten Polykondensationsprodukten führt.

Die ethylenisch ungesättigten Monomere der Komponente b) reagieren unter radikalischer Polymerisation mit den Doppelbindungen der Polyesterketten und führen so zur Vernetzung, d.h. zur Härtung der Produkte.

Handelt es sich bei den ethylenisch ungesättigten Monomeren b) um elektronegative Comonomere, wie Styrol oder Vinylacetat so kann dies beispielsweise zu "alternierenden" Copolymeren führen. Dies sind solche, die kürzere Vernetzungsbrücken besitzen und zu härteren Duroplasten führen. Elektropositivere Comonomere wie beispielsweise Methylmethacrylat neigen hingegen zur Bildung längerer Methylmethacrylatblöcke zwischen den Polyesterketten und führen zu entsprechend weicheren Duroplasten. Spezialharze können als Komponente b) beispielsweise auch Vinyltoluol, α-Methylstyren oder Diallylphthalat enthalten.

Als Schrumpfminderungskomponenten c) werden in diesem Zusammenhang insbesondere die in der Literatur als LS- oder LP-Additive bezeichneten Verbindungen eingesetzt. Hierzu gehören beispielsweise Polyethylene und deren Copolymere, Polystyrole und deren Copolymere, gesättigte Polyester, Celluloseacetobutyrat, Polyacrylate, wie zum Beispiel Polymethylmethacrylat, . Polyvinylacetate und deren Copolymere, Styrol-Butadien-Copolymere und Mischungen dieser Polymere.

Geeignete inerte Füllstoffe d) sind beispielsweise natürliche und synthetische Kreide (CaCO₃), Aluminiumtrihydrat (ATH), Kaolin, Talkum, Feldspat, Metalloxide, Quarzmehl und Gesteinsmehl.

Als Verstärkungsfasern e) sind beispielsweise Glasfasern, insbesondere solche aus alkaliarmen Borsilikatgläsern, synthetische organische Fasern (wie beispielsweise Polyester, Polyamide, Aramide), Kohlenstoff-Fasern und natürliche organische Fasern (wie beispielsweise Zellstoff) geeignet.

Des weiteren können die erfindungsgemäßen, unter Druck härtbaren, ungesättigten Polyesterharzmischungen weitere Komponenten enthalten.

Hierzu gehören beispielsweise Verarbeitungsadditive, wie Trennmittel und Antischaummittel, Stabilisatoren, wie Antioxidantien, Lichtschutzmittel, Wärmestabilisatoren und Flammschutzmittel, Massemodifikatoren, wie Haftvermittler, Benetzungsmittel, Weichmacher, Verdicker, Schlagzähmacher und Blähmittel, sowie Oberflächenmodifikatoren, wie Antistatika. Die Auswahl der entsprechenden Additive ist rein fakultativ und erfolgt in bekannter Weise nach dem Einsatzzweck.

Darüber hinaus können die erfindungsgemäßen Polyesterharzmischungen, wenn erwünscht, auch organische und anorganische Pigmente oder Farbstoffe enthalten.

Blockcopolymere werden in WO 01/44389 als Netz- und Dispergiermittel für wässrige pigmenthaltige Präparationen beschrieben. WO 00/40630 beansprucht die Verwendung der gleichen Polymerstrukturen zur Herstellung von Pigmentpräparationen, die zur Formulierung von pigmentierten Überzugsmitteln oder Tinten geeignet sind. In beiden Schriften wird die Dispergierung von Pigmenten mit Blockcopolymeren auch in Gegenwart von typischen Lackbindemitteln auf Basis von Polyesterharzen beschrieben. Hierbei wird die Viskosität der Pigmentpräparation gesenkt.

Im Fall der erfindungsgemäßen ungesättigten Polyesterharzmischungen wird bei den Einsatzmengen der Blockcopolymere kein viskositätssenkender Effekt in den erfindungsgemäßen ungesättigten Polyesterharzmischungen festgestellt. Die Absenkung der Viskosität ist auch nicht gewünscht, da eine niedrigere Viskosität der ungesättigten Polyesterharzmischung eine Separation beschleunigt.

Die in den ungesättigten Polyesterharzmischungen verwendeten Blockcopolymere f) werden vorzugsweise mit lebenden, kontrollierten Polymerisationsverfahren hergestellt. Beispiele für solche Polymerisationsverfahren sind dem Durchschnittsfachmann bekannt und unter anderem in folgenden Artikeln und Patentschriften beschrieben:
1) "Reversible Addition Fragmentation Chain Transfer Process" (RAFT) wie beispielsweise in Polym. lnt. 2000, 49, 993, US 6 291 620, WO 98/01478, WO 98/58974 und WO 99/31144 beschrieben ist.
2) kontrollierte Polymerisation mit Nitroxylverbindungen als Polymerisationsregler (NMP), wie beispielsweise in Chem. Rev. 2001, 101, 3661 beschrieben.
3) "Atom Transfer Radical Polymerization" (ATRP), wie beispielsweise in Chem. Rev. 2001, 101, 2921 beschrieben.
4) "Group Transfer Polymerization" (GTP) wie beispielsweise von O. W. Webster in "Group Transfer Polymerization", in "Encyclopedia of Polymer Science and Engineering", Band 7, H. F. Mark, N. M. Bikales, C. G. Overberger and G. Menges, Eds., Wiley Interscience, New York 1987, Seite 580 ff. beschrieben wird.

Je nach Polymerisationsmethode sind geeignete, dem Durchschnittsfachmann bekannte Reaktionsbedingungen, Monomere und Lösungsmittel zu wählen.

Als Blockcopolymere werden erfindungsgemäß solche Copolymere verstanden, die durch einen sprunghaften Übergang in der Monomerzusammensetzung entlang der Polymerkette gekennzeichnet sind, der die Grenze zwischen den einzelnen Blöcken definiert. Dieser sprunghafte Übergang in der Monomerzusammensetzung wird im Rahmen der oben genannten lebenden, kontrollierten Polymerisationsverfahren durch eine sequenzielle Zugabe der Monomeren oder Monomermischungen erreicht.

Um als Block eines Blockcopolymeren zu qualifizieren, muss ein solcher aus mindestens drei Monomereinheiten bestehen. Die Blöcke können ihrerseits eine Struktur aufweisen, wie zum Beispiel eine statistische Struktur, eine alternierende Struktur, eine Blockstruktur oder eine Gradientenstruktur.

Die Blockcopolymere haben vorzugsweise ein zahlengemitteltes Molekulargewicht von 1 000 g/mol bis 200 000 g/mol, besonders bevorzugt von 2 000 g/mol bis 50 000 g/mol und ganz besonders bevorzugt von 2 000 g/mol bis 20 000 g/mol.

Bevorzugte Beispiele für Blockcopolymerstrukturen sind AB- oder BA-Diblockcopolymere, ABA-, oder BAB-Triblockcopolymere oder Triblockcopolymere, die neben mindestens einem A-Block und mindestens einem B-Block einen oder mehrere weitere Blöcke (C-Blöcke) enthalten können, der weder unter die Definition des A-Blocks noch unter die Definition des B-Blocks fallen. Bei den ABA- und BAB-Triblockcopolymeren können im ersten Fall die beiden A-Blöcke beziehungsweise im zweiten Fall die beiden B-Blöcke unabhängig voneinander unterschiedlich aufgebaut sein solange sie den obigen Definitionen genügen. So kann sich beispielsweise der erste B-Block eines BAB-Triblockcopolymeren vom durch den A-Block getrennten zweiten B-Block hinsichtlich Länge und/oder Monomerenzusammensetzung unterscheiden. Unter den obigen Strukturen sind jedoch insbesondere die Diblockstrukturen bevorzugt.

Jeder A-Block des in der erfindungsgemäßen Polyesterharzmischung enthaltenen Blockcopolymers f) enthält vorzugsweise mindestens 10 Gew.-%, besonders bevorzugt mindestens 25 Gew.-%, und noch bevorzugter mindestens 50 Gew.-% eines oder mehrerer einpolymerisierter aminhaltiger, ethylenisch ungesättigter Monomere, bezogen auf das Gesamtgewicht des besagten A-Blocks.

Beispiele für ethylenisch ungesättigte Monomere, die Amingruppen enthalten, sind nachfolgend genannt (die Schreibweise (Meth)acrylat schließt hierbei und innerhalb der gesamten Schrift sowohl Acrylate als auch Methacrylate ein): Aminoalkyl-(meth)acrylate und Aminoalkyl(meth)acrylamide, wie zum Beispiel N,N-Dimethylaminoethyl(meth)acrylat, N,N-Dimethylaminopropyl(meth)acrylat, N,N-Dimethylaminopropyl(meth)acrylamid und 2-Butylaminoethylmethacrylat; oder ethylenisch ungesättigte N-Heterocyclen, die mit Säuren Salze bilden können, wie zum Beispiel 2-Vinylpyridin, 4-Vinylpyridin und Vinylimidazol.

Jeder B-Block des in der erfindungsgemäßen Polyesterharzmischung enthaltenen Blockcopolymers f) enthält vorzugsweise mindestens 25 Gew.-%, bevorzugter mindestens 50 Gew.-%, und besonders bevorzugt zu 100 Gew.-% mindestens eines einpolymerisierten alkyl- und/oder phenylgruppenhaltigen, ethylenisch ungesättigten Monomeren, bezogen auf das Gesamtgewicht des jeweiligen B-Blocks. Weiterhin können die Monomere, die den B-Block charakterisieren, auch im A-Block enthalten sein.

Beispiele für ethylenisch ungesättigte Monomere, die Phenylgruppen enthalten, sind Aryl(meth)acrylate, wie Benzylmethacrylat oder Phenylacrylat, wobei die Arylreste jeweils unsubstituiert oder bis zu fünffach substituiert sein können, wie zum Beispiel 4-Nitrophenylmethacrylat; oder Styrol und substituierte Styrole, wie zum Beispiel 4-Methylstyrol, 4-Vinylbenzoesäure und Natrium-4-vinylbenzolsulfonat.

Beispiele für ethylenisch ungesättigte Monomere, die Alkylgruppen enthalten, sind nachfolgend genannt: Alkyl(meth)acrylate von geradkettigen, verzweigten oder cycloaliphatischen Alkoholen mit 1 bis 22 Kohlenstoffatomen, wie zum Beispiel Methyl(meth)acrylat, Ethyl(meth)acrylat, n-Butyl(meth)acrylat, i-Butyl(meth)acrylat, t-Butyl(meth)acrylat, Lauryl(meth)acrylat, 2-Ethylhexyl(meth)acrylat, Stearyl(meth)-acrylat, Cyclohexyl(meth)acrylat, Isobornyl(meth)acrylat und t-Butyl(meth)acrylat.

Weitere Monomere können die fakultativen C-Blöcke aufbauen und sind frei unter den ethylenisch ungesättigten Monomeren wählbar, die nicht unter die Definitionen der Monomere des A- oder B-Blocks fallen. Diese Monomere können jedoch auch im A-Block und/oder B-Block enthalten sein.

Beispiele solcher ethylenisch ungesättigten Monomere sind unter anderem: Hydroxyalkyl(meth)acrylate von geradkettigen, verzweigten oder cycloaliphatischen Diolen mit 2 bis 36 Kohlenstoffatomen, wie zum Beispiel 3-Hydroxypropylmethacrylat, 3,4-Dihydroxybutylmethacrylat, 2-Hydroxyethyl(meth)acrylat, 4-Hydroxybutyl(meth)acrylat, 2-Hydroxypropylmethacrylat; (Meth)acrylate von Ethern, Polyethylenglykolen, Polypropylenglycolen oder gemischten Poly(ethylen/propylen)-glycolen mit 5 bis 80 Kohlenstoffatomen, wie zum Beispiel Tetrahydrofurfurylmethacrylat, Vinyloxyethoxyethylmethacrylat, Methoxyethoxyethylmethacrylat, Cyclohexyloxymethylmethacrylat, Methoxymethoxyethylmethacrylat, Benzyloxy-methylmethacrylat, Furfurylmethacrylat, 2-Butoxyethylmethacrylat, 2-Ethoxyethoxymethylmethacrylat, 2-Ethoxyethylmethacrylat, Allyloxymethylmethacrylat, Poly(ethylenglycol)methylether(meth)acrylat, und Poly(propylenglycol)methylether(meth)acrylat; Caprolacton- und/oder Valerolacton-modifizierte Hydroxyalkyl(meth)acrylate mit einem mittleren Molekulargewicht Mₙ von 220 bis 1200, wobei die Hydroxy(meth)acrylate bevorzugt von geradkettigen, verzweigten oder cycloaliphatischen Diolen mit 2 bis 8 Kohlenstoffatomen abgeleitet sind; und Methacrylnitril und Acrylnitril.

Eine weitere Aufgabe der vorliegenden Erfindung bestand darin die erfindungsgemäßen ungesättigten Polyesterharzmischung für unter Druck härtbare Formmassen mit mischungsstabilisierenden Zusatzstoffen zu versehen, die beim Aushärten des ungesättigten Polyesterharzes in die polymere Matrix einbaubar sind und so verhindern, dass unerwünschte Effekte wie das Ausschwitzen des Zusatzstoffs auftreten.

Diese Aufgabe wurde insbesondere dadurch gelöst, dass die Blockcopolymere f) beispielsweise mittels oben erwähnten NMP- oder RAFT-Technologien, bei welchen der bei der Herstellung verwendete Polymerisationsregler am Blockcopolymerkettenende verbleibt, hergestellt werden. Somit ist es beim Aushärten des Harzes möglich, dass eine Kettenverlängerung des Blockcopolymeren erfolgt, so dass das Blockcopolymer in die polymere Matrix des ungesättigten Polyesterharzes eingebaut wird, und dies das nachträgliche Ausschwitzen des Blockcopolymeren verhindert.

Beispiele für Polymerisationsregler für NMP sind 2,2,6,6-Tetramethylpiperidinoxyl (TEMPO) und N-*tert*-Butyl-N-[1-diethylphosphono-(2,2-dimethylpropyl)]nitroxyl. Beispiele für Polymerisationsregler für RAFT sind Thiocarbonsäureester oder Xanthogensäureester. Weitere Beispiele sind der oben aufgeführten Literatur entnehmbar und dem Durchschnittsfachmann bekannt.

In einer besonderen Ausführungsform werden die Komponenten a) - d) und des Blockcopolymeren f) miteinander vermischt. Die Anforderung an diese Mischung ist, dass sie bei Lagerung im Wesentlichen homogen bleibt und nicht separiert. Üblicherweise werden erst anschließend die weitere Komponente e) sowie der Verdicker hinzugegeben und die ganze Mischung homogenisiert bevor sie zu Formteilen verpresst wird, wobei die Harzmischung bei dem Pressvorgang, im Wesentlichen ohne Entmischung der Komponenten, polymerisiert.

Die Verarbeitung ungesättigter Polyesterharzmischungen und weitere Beispiele ungesättigter Polyesterharze, Schrumpfminderungskomponenten, Verstärkungsfasern, inerter Füllstoffe oder Additive und deren Verwendung sind in den Monographien: J. H. Aurer und A. Kasper "Unsaturated Polyester Resins", 2003, Verlag Moderne Industrie und Hamid G. Kia "Sheet Molding Compounds Science and Technology", 1993, Hanser Publishers, München beschrieben.

### Herstellung der Beispielpolymere

### Vergleichsbeispiel 1 (statistisches Copolymer)

14,5 g Polypropylenglycol Pluriol P 600 (BASF) wird in einem Dreihalskolben mit KPG-Rührer und Rückflußkühler unter einer Stickstoffatmosphäre auf 120°C erhitzt. Innerhalb von 120 min wird eine Mischung aus 12 g Styren, 22 g n-Butylacrylat, 15 g N,N-Dimethylaminoethylmethacrylat und 0,5 g 2,2'-Azobis(isobutyronitrile) in den Kolben geleitet. Nach einer weiteren Stunde ist ein Umsatz von 98 % erreicht. Das Polymer wird anschließend mit weiterem Polypropylenglycol Pluriol P 600 auf einen Gehalt von 52 % eingestellt.

### BA-Blockcopolymere

### Polymer 1

14,5 g Polypropylenglycol Pluriol P 600 (BASF), 12 g Styren, 22 g n-Butylacrylat,1 g SG1 (= N-*tert*-Butyl-N-[1-diethylphosphono-(2,2-dimethylpropyl)]nitroxyl; Herstellung siehe Macromolecules 2000, 33, 1141) und 0,35 g 2,2'-Azobis(isobutyronitrile) werden in einem Dreihalskolben mit KPG-Rührer und Rückflußkühler unter einer Stickstoffatmosphäre auf 120°C erhitzt. Nach ca. 3 Stunden ist ein Umsatz von 90 % erreicht. Anschließend werden 15 g N,N-Dimethylaminoethylmethacrylat hinzugegeben und es wird weitere 5 h bis zu einem Umsatz von über 95 % polymerisiert. Das Polymer wird anschließend mit weiterem Polypropylenglycol Pluriol P 600 auf einen Gehalt von 52 % eingestellt.

### Polymer 2

14,5 g Polypropylenglycol Pluriol P 600 (BASF), 35 g n-Butylacrylat,1 g SG1 und 0,35 g 2,2'-Azobis(isobutyronitrile) werden in einem Dreihalskolben mit KPG-Rührer und Rückflußkühler unter einer Stickstoffatmosphäre auf 120°C erhitzt. Nach ca. 3 Stunden ist ein Umsatz von 90 % erreicht. Anschließend werden 15 g N,N-Dimethylaminoethylmethacrylat hinzugegeben und es wird weitere 5 h bis zu einem Umsatz von über 95 % polymerisiert. Das Polymer wird anschließend mit weiterem Polypropylenglycol Pluriol P 600 auf einen Gehalt von 52 % eingestellt.

### BAB-Blockcopolymere

### Polymer 3

14,5 g Polypropylenglycol Pluriol P 600, 6 g Styrol, 11 g n-Butylacrylat,1 g SG1 und 0,35 g 2,2'-Azobis(isobutyronitrile) werden in einem Dreihalskolben mit KPG-Rührer und Rückflußkühler unter einer Stickstoffatmosphäre auf 120°C erhitzt. Nach ca. 3 Stunden ist ein Umsatz von 95 % erreicht. Anschließend werden 15 g N,N-Dimethylaminoethylmethacrylat hinzugegeben und es wird weitere 4 h bei einer Temperatur von 100°C bis zu einem Umsatz von über 95 % polymerisiert. Nach der Zugabe von weiteren 6 g Styrol und 11 g n-Butylacrylat wird bei 120°C auf einen Umsatz größer 95% polymerisiert (etwa 10 Stunden). Das Polymer wird anschließend mit weiterem Polypropylenglycol Pluriol P 600 auf einen Gehalt von 52 % eingestellt.

### Polymer 4

14,5 g Polypropylenglycol Pluriol P 600, 17 g n-Butylacrylat,1 g SG1 und 0,35 g 2,2'-Azobis(isobutyronitrile) werden in einem Dreihalskolben mit KPG-Rührer und Rückflußkühler unter einer Stickstoffatmosphäre auf 120°C erhitzt. Nach ca. 3 Stunden ist ein Umsatz von 95 % erreicht. Anschließend werden 15 g N,N-Dimethylaminoethytmethacrylat hinzugegeben und es wird weitere 4 h bei einer Temperatur von 100°C bis zu einem Umsatz von über 95 % polymerisiert. Nach der Zugabe von weiteren 17 g n-Butylacrylat wird bei 120°C auf einen Umsatz größer 95% polymerisiert (etwa 10 Stunden). Das Polymer wird anschließend mit weiterem Polypropylenglycol Pluriol P 600 auf einen Gehalt von 52 % eingestellt.

### Polymer 5

14,5 g Polypropylenglycol Pluriol P 600, 6 g Styrol, 11 g n-Butylacrylat,1 g SG1 und 0,35 g 2,2'-Azobis(isobutyronitrile) werden in einem Dreihalskolben mit KPG-Rührer und Rückflußkühler unter einer Stickstoffatmosphäre auf 120°C erhitzt. Nach ca. 3 Stunden ist ein Umsatz von 95% erreicht. Anschließend werden 15 g N,N-Dimethylaminoethylmethacrylat hinzugegeben und es wird weitere 4 h bei einer Temperatur von 100°C bis zu einem Umsatz von über 95% polymerisiert. Nach der Zugabe von 17 g n-Butylacrylat wird bei 120 °C auf einen Umsatz größer 95 % polymerisiert (ca. 10 Stunden). Das Polymer wird anschließend mit weiterem Polypropylenglycol Pluriol P 600 auf einen Gehalt von 52 % eingestellt.

### Anwendungstechnische Beispiele

### Test der Homogenität der ungesättigten Polyesterharzmischung A

### Rezeptur

| | | | |
|---|---|---|---|
| 1 | UP - Harz | 70,0 g | Palapreg P 17-02 (BASF) |
| 2 | LS - Additive | 30,0 g | Palapreg H 814-01 (BASF) |
| 3 | Polymer | siehe Tabelle 1 | Vergleichsbeispiel 1 und Polymere 1 - 5 |
| 4 | CaCO₃ | 150,0 g | Millicarb (Omya) |
| 5 | Pigment | 0,5g | Cobaltblau |
| 6 | Verstärkungsfaser | 25 g | Glasfaser OC RO7 4800 tex, Glasgehalt: 97 Gewichtsteile (Owns Corning), geschnitten (Länge 6 - 50 mm) |

UP-Harz: ungesättigtes Polyesterharz, angelöst in Styrol
LS-Additiv: Low shrink-Additiv (Schrumpfminderungskomponente)
Palapreg P 17-02: ungesättigtes Polyesterharz angelöst in Styrol
Palapreg H 814-01: Polystyrol angelöst in Styrol

### Herstellung und Beurteilunq der ungesättigten Polyesterharzmischung :

Die Komponenten 1 bis 5 werden in Rezepturreihenfolge zugegeben und von Hand gemischt, anschließend wird homogenisiert. Danach wird die Komponente 6 untergerührt. Die Mischung wird in ein 100 ml Rollrand-Schnappdeckelgläser gefüllt und bei Raumtemperatur gelagert. Nach 24 Stunden werden die Proben visuell auf Homogenität beurteilt.

**Tabelle 1**

| Polymer | Menge an Polymer | Beurteilung der Homogenität |
|---|---|---|
| Nullprobe (kein Polymer) | | starke Separation |
| Vergleichsbeispiel 1 | 1 g | starke Separation |
| Polymer 1 | 0,5 g | keine Separation |
| Polymer 2 | 0,5 g | keine Separation |
| Polymer 3 | 0,5 g | keine Separation |
| Polymer 4 | 0,5 g | keine Separation |
| Polymer 5 | 0,5 g | keine Separation |

In allen Beispielen wird keine Viskositätsreduzierung mit den Polymeren 1-5 festgestellt.

Das Pigment Cobaltblau ermöglicht eine bessere Beurteilung der Homogenität der ungesättigten Polyesterharzmischung, wird in der Praxis jedoch üblicherweise nicht verwendet.

Als Vergleichsbeispiel 1 wurde ein statistisches Copolymer gewählt, um die Bedeutung des blockartigen Aufbaus der erfindungsgemäßen Polymere hinsichtlich der mischungsstabilisierenden Wirkung beurteilen zu können.

Die in Tabelle 1 dargestellten Ergebnisse der Anwendungsbeispiele zeigen, dass bei Verwendung der Blockcopolymere "Polymer 1" bis "Polymer 5" eine deutlich bessere mischungsstabilisierende Wirkung in den ungesättigten Polyesterharzmischungen erhalten werden kann als mit dem vergleichbaren, statistisch aufgebauten Polymer des Vergleichsbeispiels 1.

### Testrezeptur SMC Elektrograu - RAL 7032

Die in Tabelle 2 angegebene SMC-Formulierung wurde hergestellt, indem zuerst alle flüssigen Bestandteile mittels einer Dissolvers homogenisiert und anschließend alle Feststoffe untergemischt wurden.

**Tabelle 2**

| **Verwendungsbeispiel** | **Menge in Gew.-Teilen** |
|---|---|
| Harz 1 | 70,00 |
| Palapreg P17-02 | |
| Standardglykol -Phthalsäure- Harz (35%ig in Styrol) | |
| Harz 2 | 30,00 |
| Palapreg H 814-01 | |
| Polystyrol (33%ig in Styrol) | |
| Pigmentpaste in monomerfreiem Polyesterharz, | 10,00 |
| Brohl Chemie, Elektrograu RAL 7032 - 65 L (a.V.) | |
| tert-Butylperoxybenzoat | 1,50 |
| Härter (Trigonox C von Akzo) | |
| 2,6-Di-tert-butyl-4-methylphenol | 0,10 |
| Inhibitor (lonol CP) | |
| Füllstoff 1 | 50,00 |
| Kreide(Millicarb OG) | |
| Füllstoff 2 | 120,00 |
| AI(OH)₃ (Martinal ON 921) | |
| PE Pulver | 5,00 |
| Coathylene HA 1681 | |
| Luvatol MK 35 NV | 2,00 |
| (35%iges MgO in monomerfreiem | |
| UP Harz | |
| Polymer 1 | 0,50 |

Aus der Formulierung wurde auf einer SMC-Versuchsanlage der Firma Schmidt und Heinzmann SMC-Prepregs hergestellt, indem die Harzmasse zwischen zwei Polyamid-Trägerfolien aufgebracht wurde. (Bandgeschwindigkeit: 5,5 m/min; Rakelspalt: 1,6 mm; Flächengewicht: 4000 g/m2; verwendete Glassorte: OC RO7 4800 tex von Owns Corning; Glasgehalt: 97 Gewichtsteile, das entspricht 25 Gewichts-% auf die Gesamtformulierung).

Nach einer Lagerzeit von 5 Tagen bei Raumtemperatur wurde das eingedickte SMC-Prepreg zu Stücken von 860 g ausgeschnitten, die Trägerfolie wurde abgezogen und das Aussehen wurde bewertet.

### Prüfung der Homogenität des SMC nach dem Verpressen

Die von der Trägerfolie befreiten SMC-Stücke wurden mit einer Formauslegung von 40% zu Prüfplatten verpresst. Dabei wurde eine Temperatur von 150 bis 155°C, eine Presszeit von 180 s und eine Stempeldruckkraft von 1200 kN verwandt. Anschließend wurden die fertig verpressten Platten visuell hinsichtlich Homogenität und Oberflächenqualität beurteilt. Zur Bewertung der Oberflächenqualität wurde die zu prüfende Platte zusammen mit einer Vergleichsplatte leicht schräg zum Fenster gehalten. Es wurde bewertet, wie klar sich Objekte in der Probenoberfläche spiegeln konnten.

Die im Verwendungsbeispiel gefertigte SMC-Platte zeigt die gewünschte Homogenität, das heißt eine glänzende Oberfläche ohne Marmorierung. Eine stumpfe, marmorierte SMC-Oberfläche würde durch Entmischen der Komponenten der ungesättigten Polyesterharzmischung während des Pressvorganges entstehen.

## Patentansprüche

1. Eine unter Anwendung äußeren Drucks härtbare, ungesättigte Polyesterharzmischung, die mindestens folgende Komponenten umfasst:
a) ein ungesättigtes Polyesterharz mit einem mittleren gewichtsgemittelten Molekulargewicht von 500 bis 5000 g/mol;
b) ein ethylenisch ungesättigtes Monomer;
c) eine Schrumpfminderungskomponente;
d) einen inerten Füllstoff
e) eine Verstärkungsfaser; und
f) 0,01 bis 1 Gew.-% eines Blockcopolymeren bezogen auf das Gesamtgewicht der ungesättigten Polyesterharzmischung, wobei das Blockcopolymere mindestens einen A-Block und mindestens einen B-Block umfasst, wobei der
A-Block mindestens ein einpolymerisiertes aminhaltiges, ethylenisch ungesättigtes Monomer enthält; und der
B-Block mindestens ein einpolymerisiertes alkyl- und/oder phenylgruppenhaltiges, ethylenisch ungesättigtes Monomer enthält und frei von einpolymerisierten aminhaltigen, ethylenisch ungesättigten Monomeren ist.

2. Polyesterharzmischung gemäß Anspruch 1, wobei das Blockcopolymere f) mittels NMP oder RAFT hergestellt wurde.

3. Polyesterharzmischung gemäß Anspruch 1 oder 2, wobei das Blockcopolymere f) am Polymerkettenende einen Polymerisationsregler aufweist, welcher gegenüber dem ungesättigten Polyesterharz a) und/oder dem ethylenisch ungesättigten Monomer b) reaktiv ist.

4. Polyesterharzmischung gemäß einem oder mehreren der Ansprüche 1 bis 3, wobei
Block A ein oder mehrere Monomere gewählt aus der Gruppe bestehend aus Aminoalkyl(meth)acrylaten, Aminoalkyl(meth)acrylamiden und ethylenisch ungesättigten stickstoffhaltigen Heterocyclen, die mit Säuren Salze bilden können, enthält; und
Block B ein oder mehrere Monomere gewählt aus der Gruppe bestehend aus Aryl(meth)acrylaten, Styren, substituierten Styrenen, und Alkyl(meth)acrylaten geradkettiger, verzweigter oder cycloaliphatischer Alkohole mit 1 bis 22 Kohlenstoffatomen, enthält.

5. Polyesterharzmischung gemäß einem oder mehreren der Ansprüche 1 bis 4, wobei das oder die aminhaltigen, ethylenisch ungesättigten Monomere des A-Blocks in besagtem A-Block mindestens in einem Anteil von 10 Gew.-%, vorzugsweise mindestens 25 Gew.-% und besonders bevorzugt mindestens 50 Gew.-%, bezogen auf das Gesamtgewicht des A-Blocks vorliegen.

6. Polyesterharzmischung gemäß einem oder mehreren der Ansprüche 1 bis 5, wobei das oder die alkyl- und/oder phenylgruppenhaltigen, ethylenisch ungesättigten Monomere des B-Blocks in besagtem B-Block mindestens in einem Anteil von 25 Gew.-%, vorzugsweise mindestens 50 Gew.-% und besonders bevorzugt zu 100 Gew.-%, bezogen auf das Gesamtgewicht des B-Blocks vorliegen.

7. Polyesterharzmischung gemäß einem oder mehreren der Ansprüche 1 bis 6, wobei es sich beim Blockcopolymeren f) um ein AB-, BA-, ABA- oder BAB-Blockcopolymeres handelt.

8. Polyesterharzmischung gemäß Anspruch 7, wobei es sich beim Blockcopolymeren um ein Diblockcopolymeres handelt.

9. Polyesterharzmischung gemäß einem oder mehreren der Ansprüche 1 bis 8, die einer Härtung unterzogen wurde.

10. Verfahren zu Herstellung einer unter Anwendung äußeren Drucks härtbaren, verstärkungsfaserhaltigen, ungesättigten Polyesterharzmischung, wobei zunächst die Komponenten a) - d) und f) vermischt werden und anschließend die weiteren Komponenten der Mischung zugegeben werden.

11. Verwendung der des in einem der vorangegangenen Ansprüche definierten Blockcopolymeren f) in ungesättigten Polyesterharzmischungen, wobei das Blockcopolymer f) mittels NMP oder RAFT hergestellt wurde und/oder keine viskositätssenkende Wirkung auf die ungesättigte Polyesterharzmischung ausübt.

12. Verwendung gemäß Anspruch 11, wobei die Polyesterharzmischung eine Polyesterharzmischung gemäß einem oder mehreren der Ansprüche 1 bis 9 ist oder die Polyesterharzmischung gemäß Anspruch 11 erhalten wurde.

13. Verwendung gemäß Anspruch 11 oder 12, wobei die Polyesterharzmischung zu einer Formmasse gehärtet wird.

## Claims

1. An unsaturated polyester resin mixture which can be cured by applying external pressure and which encompasses at least the following components:
a) an unsaturated polyester resin whose weight-average molar mass is from 500 to 5000 g/mol;
b) an ethylenically unsaturated monomer;
c) a shrinkage-reducing component;
d) an inert filler; and
e) a reinforcing fibre; and
f) from 0.01 to 1% by weight of a block copolymer, based on the total weight of the unsaturated polyester resin mixture, where the block copolymer encompasses at least one A block and encompasses at least one B block, where the
A block contains at least one amine-containing, ethylenically unsaturated monomer incorporated by polymerization into the polymer; and the
B block contains at least one alkyl- and/or phenyl-containing, ethylenically unsaturated monomer incorporated by polymerization into the polymer, and is free from amine-containing, ethylenically unsaturated monomers incorporated by polymerization into the polymer.

2. Polyester resin mixture according to Claim 1, where the block copolymer f) has been prepared by means of NMP or RAFT.

3. Polyester resin mixture according to Claim 1 or 2, where the block copolymer f) has, at the polymer chain end, a polymerization regulator which is reactive toward the unsaturated polyester resin a) and/or toward the ethylenically unsaturated monomer b).

4. Polyester resin mixture according to one or more of Claims 1 to 3, where
block A comprises one or more monomers selected from the group consisting of aminoalkyl (meth)acrylates, aminoalkyl (meth)acrylamides and ethylenically unsaturated nitrogen-containing heterocycles which can form salts with acids; and
block B comprises one or more monomers selected from the group consisting of aryl (meth)acrylates, styrene, substituted styrenes, and alkyl (meth)acrylates of straight-chain, branched or cycloaliphatic alcohols having from 1 to 22 carbon atoms.

5. Polyester resin mixture according to one or more of Claims 1 to 4, where the amine-containing ethylenically unsaturated monomer(s) of the A block is/are present at least in a proportion of 10% by weight, preferably at least 25% by weight and particularly preferably at least 50% by weight, based on the total weight of the A block, in the said A block.

6. Polyester resin mixture according to one or more of Claims 1 to 5, where the alkyl- and/or phenyl-containing, ethylenically unsaturated monomer(s) of the B block is/are present at least in a proportion of 25% by weight, preferably at least 50% by weight and particularly preferably 100% by weight, based on the total weight of the B block, in the said B block.

7. Polyester resin mixture according to one or more of Claims 1 to 6, where the block copolymer f) is an AB, BA, ABA or BAB block copolymer.

8. Polyester resin mixture according to Claim 7, where the block copolymer is a diblock copolymer.

9. Polyester resin mixture according to one or more of Claims 1 to 8, which has been subjected to a curing process.

10. Process for preparation of an unsaturated polyester resin mixture which comprises reinforcing fibre and which can be cured by applying external pressure, where components a) d) and f) are first mixed and then the other components are added to the mixture.

11. Use of the block copolymer f) defined in any of the preceding claims in unsaturated polyester resin mixtures, where the block copolymer f) has been prepared by means of NMP or RAFT, and/or exerts no viscosity-lowering effect on the unsaturated polyester resin mixture.

12. Use according to Claim 11, where the polyester resin mixture is a polyester resin mixture according to one or more of Claims 1 to 9 or the polyester resin mixture has been obtained according to Claim 11.

13. Use according to Claim 11 or 12, where the polyester resin mixture is cured to give a moulding composition.

## Revendications

1. Mélange de résine polyester insaturé durcissable sous application d'une pression extérieure, comprenant au moins les composants suivants :
a) une résine polyester insaturée ayant un poids moléculaire moyen en poids de 500 à 5000 g/mol ;
b) un monomère éthyléniquement insaturé ;
c) un composant de réduction du retrait ;
d) un matériau de remplissage inerte ;
e) une fibre de renforcement ; et
f) 0,01 à 1 % en poids d'un copolymère séquencé par rapport au poids total du mélange de résine polyester insaturé, le copolymère séquencé comprenant au moins un bloc A et au moins un bloc B,
le bloc A contenant au moins un monomère polymérisé éthyléniquement insaturé contenant une amine ; et
le bloc B contenant au moins un monomère polymérisé éthyléniquement insaturé contenant des groupements alkyle et/ou phényle et étant exempt de monomères polymérisés éthyléniquement insaturés contenant une amine.

2. Mélange de résine polyester selon la revendication 1, le copolymère séquencé f) ayant été fabriqué au moyen de NMP ou RAFT.

3. Mélange de résine polyester selon la revendication 1 ou 2, le copolymère séquencé f) présentant un régulateur de polymérisation à l'extrémité de la chaîne polymère, lequel est réactif par rapport à la résine polyester insaturée a) et/ou au monomère éthyléniquement insaturé b).

4. Mélange de résine polyester selon une ou plusieurs des revendications 1 à 3,
le bloc A contenant un ou plusieurs monomères sélectionnés dans le groupe consistant en aminoalkyl(méth)acrylates, aminoalkyl(méth)acrylamides et hétérocycles éthyléniquement insaturés contenant de l'azote, qui peuvent former des sels avec des acides ; et
le bloc B contenant un ou plusieurs monomères sélectionnés dans le groupe consistant en aryl(méth)acrylates, styrène, styrènes substitués et alkyl(méth)acrylates d'alcools à chaîne droite, ramifiés ou cycloaliphatiques présentant 1 à 22 atomes de carbone.

5. Mélange de résine polyester selon une ou plusieurs des revendications 1 à 4, le ou les monomère(s) éthyléniquement insaturé(s) contenant une amine du bloc A étant présent(s) dans ledit bloc A au moins dans une proportion de 10 % en poids, de préférence au moins 25 % en poids et plus préférablement au moins 50 % en poids, par rapport au poids total du bloc A.

6. Mélange de résine polyester selon une ou plusieurs des revendications 1 à 5, le ou les monomère(s) éthyléniquement insaturé(s) contenant des groupements alkyle et/ou phényle du bloc B étant présent(s) dans ledit bloc B au moins dans une proportion de 25 % en poids, de préférence au moins 50 % en poids et plus préférablement 100 % en poids, par rapport au poids total du bloc B.

7. Mélange de résine polyester selon une ou plusieurs des revendications 1 à 6, le copolymère séquencé f) étant un copolymère séquencé AB, BA, ABA ou BAB.

8. Mélange de résine polyester selon la revendication 7, le copolymère séquencé étant un copolymère diséquencé.

9. Mélange de résine polyester selon une ou plusieurs des revendications 1 à 8 qui a subi un durcissement.

10. Procédé de fabrication d'un mélange de résine polyester insaturé contenant une fibre de renforcement, durcissable sous application d'une pression extérieure, les composants a) à d) et f) étant tout d'abord mélangés avant d'ajouter les autres composants au mélange.

11. Utilisation du copolymère séquencé f) défini dans l'une des revendications précédentes dans des mélanges de résine polyester insaturés, le copolymère séquencé f) ayant été fabriqué au moyen de NMP ou RAFT et/ou n'ayant aucun effet de réduction de la viscosité sur le mélange de résine polyester insaturé.

12. Utilisation selon la revendication 11, le mélange de résine polyester étant un mélange de résine polyester selon une ou plusieurs des revendications 1 à 9 ou le mélange de résine polyester ayant été obtenu selon la revendication 11.

13. Utilisation selon la revendication 11 ou 12, le mélange de résine polyester étant durci pour former une matière à mouler.
